Europäisches Patentamt

European Patent Office

Office européen des brevets

(19)

(11) Publication number: **0 084 882**
**A1**

(12) **EUROPEAN PATENT APPLICATION**

(21) Application number: **83100601.0**

(22) Date of filing: **24.01.83**

(51) Int. Cl.³: **C 08 K 5/37**, C 08 F 8/34

(30) Priority: **25.01.82 US 342622**

(43) Date of publication of application: **03.08.83**
**Bulletin 83/31**

(84) Designated Contracting States: **DE FR GB IT NL**

(71) Applicant: **BORG-WARNER CHEMICALS INC.,**
**International Center, Parkersburg West**
**Virginia 26101 (US)**

(72) Inventor: **Joffe, Zenon, Iepenlaan 11, NL-2161 MD Lisse**
**(NL)**

(74) Representative: **Vossius Vossius Tauchner Heunemann**
**Rauh, Siebertstrasse 4 P.O. Box 86 07 67,**
**D-8000 München 86 (DE)**

(54) **Stabilized thermoplastics and method for their preparation.**

(57) Styrenic resins, and particularly rubber-modified styrenic resins, are usefully stabilized when melt processed in mixtures with a stabilizer containing a mercaptan group and as a recation promotor, a free radical initiator. The process grafts the stabilizer to the styrenic resin, thus preventing subsequent loss of stabilizer by leaching or migration.

EP 0 084 882 A1

Our Ref.: S 214 EP
Case:     077120-M

0084882

BORG-WARNER CHEMICALS, INC.
PARKERSBURG, WEST VIRGINIA, U.S.A.

### STABILIZED THERMOPLASTICS AND METHOD FOR THEIR PREPARATION

This invention relates to stabilized thermoplastics and a method for improving the stability of polymeric materials toward ultraviolet radiation (UV) and thermal oxidation. More particularly, the invention is an improved method for incorporating antioxidant and UV stabilizers into polymeric compositions by grafting the stabilizer molecules to the polymer chains.

Elastomers, and particularly rubbery polymers of olefins or dienes, are sensitive to degradation processes initiated by exposure to UV radiation and to thermal oxidation. This deficiency must be circumvented in order for these elastomers to find any practical application, and a substantial body of art has developed over the years directed to compositions and processes for stabilizing these materials. The most commonly employed method for stabilizing polymers has been to incorporate any of a variety of additive compounds into the composition, singly or in various combinations, for the purpose of protecting the polymer structure. As with nearly all additives, however, volatility and the marginal compatibility of most stabilizing compounds with the base polymer causes loss of the additives by way of migration, leaching and similar processes, with a concommitant deterioration in stability.

An alternative approach has been devised in recent years, that of chemically bonding the stabilizer molecule to the base polymer. For example, in U. S.

3,825,523, there is disclosed a method for grafting phenolic or sulfur-containing stabilizer compounds onto polyolefins. The grafting is achieved by providing the polyolefin with pendant hydroxyl functionality, then coupling the polyolefin and the stabilizer molecule by means of an esterification reaction. The resulting olefin rubber composition having pendant grafted stabilizer groups exhibits improved oxidative and UV stability and the stabilizer moiety is neither leached nor exuded from the rubber during processing or use.

Although this and similar processes have been applied to the stabilization of a variety of elastomers, the method has found little application for stabilizing impact-modified thermoplastics such as ABS. Recently, in U. S. 3,864,429, there was disclosed a method for improving the weathering properties of ABS and MBS resins by treating the ABS (or MBS) emulsion with an alkyl mercaptan prior to coagulating the latex. Treating ABS latices with mercaptans containing phenolic groupings has also been described in the art, as summarized for example in J. Appl. Polymer Sci. 26 2581-2592 (1981). In these systems, the resin in latex form is treated with a suitable mercaptan in the presence of a free radical initiator such as a peroxide, effectively grafting the mercaptan to the polymer. The resulting impact-modified thermoplastic resins have antioxidant and/or UV stabilizer molecules chemically attached to the polymer chains which are not leached or exuded during use or compounding. Although the processes appear to be successful in producing polymers with bound stabilizer groups, the methods heretofore used with impact-modified resins have been applied only to resins in the form of latex emulsions. As a practical matter, such processes suffer the economic disadvantages of adding a time-consuming process step and of increasing the total energy required to produce the resin.

A process for accomplishing the production of impact-modified thermoplastics having bound stabilizers which is applicable to resins produced by any of a variety of methods including bulk and suspension techniques as well to those in latex form and which would avoid adding otherwise unnecessary and time-consuming process steps would thus be a significant advance in the stabilizing art.

This invention provides an improved method for grafting stabilizer molecules to thermoplastic resins and particularly to impact-modified thermoplastics such as ABS. The grafting process is carried out during a conventional melt processing or compounding operation by combining the unstabilized thermoplastic, the stabilizer and a reaction promoter in standard melt processing equipment.

The improved method of making the stabilized thermoplastics of this invention involves a melt processing step in which a thermoplastic resin, a stabilizer containing a mercaptan grouping and a reaction promoter are combined. The melt processing operation results in grafting of the stabilizer molecules to the thermoplastic resin and produces a resin having bound stabilizers which are thereby rendered non-volatile and non-migrating.

The thermoplastic resins useful for the purposes of this invention are the high impact or rubber-modified styrenic resins including high impact polystyrene, graft acrylonitrile-butadiene-styrene (ABS) resins, methyl methacrylate-butadiene-styrene (MBS) graft copolymers and the like, as well as the analogous resins in which alpha methylstyrene or vinyl toluene is employed in the grafting phase, and impact modified analogs prepared by blending a rigid copolymer or terpolymer with a rubbery modifier resin. Although the improved process of this invention may be used to graft stabilizer molecules to a variety of thermoplastic resins, the preferred resins are those containing a rubbery impact modifier component and more particularly rubbery diene-based impact modifiers in as much as such resins are thought to be inherently sensitive to thermal oxidation and UV induced degradation.

The mercaptan group-containing stabilizer molecules useful for the practice of this invention are conventional antioxidant and UV stabilizer molecules containing or capable of being modified to contain a mercaptan group. The stabilizer molecules may thus be represented by the formula R-SH, wherein R- is a radical having antioxidant and/or UV stabilizing properties, and wherein -SH is a mercapto grouping. More particularly, R- is an alkylene radical and further contains at least one aryl radical selected from the group consisting of hydroxyphenylene radicals, benzoyl phenylene radicals and benzoyl phenylene radicals having one or more hydroxyl groups attached thereto. Representative stabilizer compounds include hydroxyphenylalkylene mercaptans such as 4-hydroxy-2,6-di-t-butylphenylmethyl mercaptan and mercapto alkyl esters of hydroxyalkylated hydroxybenzophenones such as 2-(3-hydroxy-4-(benzoyl)-phenoxy)ethyl-3-mercaptopropionate and 2-(3-hydroxy-4-(benzoyl)phenoxy)ethyl-2-mercaptoacetate. The latter compounds are readily produced by ethoxylation of commercially available dihydroxybenzophenones followed by esterification with the appropriate mercapto acid. Mixtures containing two or more stabilizers and including both antioxidants and UV stabilizers may also be employed.

The reaction promoters useful in the practice of this invention may be generally characterized as free radical initiators, and include peroxides, hydroperoxides and the like which thermally decompose at processing temperatures to generate free radicals. Representative compounds include dicumyl peroxide and cumene hydroperoxide as well as cyclic diperoxides such as 3,3,6,6,9,9-hexamethyl-1,2,4,5-tetraoxocyclononan. The preferred free radical initiators will be those that are relatively stable and have a substantial half-life at the elevated temperatures employed in melt processing styrenic resins.

The process of this invention is carried out by combining the thermoplastic resin, the mercaptan stabilizer and the free radical initiator reaction promoter in a standard melt processing apparatus such as an extruder, a roll mill or a Banbury mixer and melt processing the mixture using normal processing conditions. The amount of stabilizer and reaction promoter employed will be varied and depend in part upon the particular stabilizer used and amount of rubbery impact modifier present in the thermoplastic. However, for most purposes from about 0.1 to about 2% by weight stabilizer and from about 0.01 to about 1.0% by weight reaction promoter will be employed. The thermoplastic resin, stabilizer and reaction promoter will preferably be dry-blended from powder and then charged as a mixture to the melt processing equipment. Although less desirable since it is difficult to obtain complete dispersion of the components before initiation of the grafting reaction occurs, it is nonetheless possible to charge the components separately to the melt processing equipment. The processing operation will be conducted at the temperatures commonly employed for compounding thermoplastic resins, usually in the range of from 140 to 250°C and for a period of time of from about 1 to about 30 min., depending in part upon the particular processing equipment employed. The grafted resin may then be extruded or otherwise processed to provide a pelletized or milled resin mass, or may further be compounded with fillers, pigments, flame retardants and the like according to practice well established in the art of compounding resins.

The practice of this invention will be better understood by consideration of the following examples which are provided by way of illustration and are not to be construed as limiting of the invention.

The stabilizers employed in the following examples were synthesized by known processes and include 2,6-di-t-butyl-4-hydroxybenzyl mercaptan (BHBM), 2-(3-hydroxy-4-(benzoyl) phenoxy) ethyl-3-mercaptopropionate (HBPMP) and 2-(3-hydroxy-4-(benzoyl) phenoxy) ethyl-2-mercaptoacetate (HBPMA). These components and their respective syntheses are described in Europ. Polym.J. 16 971 (1980).

The ABS resin employed in Examples 1-4 is a 30% butadiene rubber-modified styrene-acrylonitrile graft copolymer containing 46.8% wt % styrene and 23.3 wt % acrylonitrile. The resin, obtained in latex form with a minimal amount of stabilizers was acid-coagulated, then collected and dried in a vacuum oven at 100°F.

Examples 1-4

The ABS resin (100 parts) was compounded by dry blending with 0.5 parts by weight lubricant and the stabilizers and reaction promoters in a Braun mixer according to the formulations presented in Table I. The mixtures were then fluxed in a Brabender Plastograph fitted with a mixing head at 30 rpm for a period of 30 min. with samples removed at 10, 20 and 30 minutes. The mixing head was heated to 180°C, and stock temperatures were in the range of 169°-177°C. The cooled polymer samples were melt pressed to form films for evaluation.

The control formulations, Examples A-C, were prepared, processed and molded in substantially the same way.

TABLE I

**ABS Formulations**

| Example No. | 1 | 2 | 3 | 4 | A | B | C |
|---|---|---|---|---|---|---|---|
| Components: (1) | | | | | | | |
| ABS, pbw | 100 | 100 | 100 | 100 | 100 | 100 | 100 |
| HBPMP, pbw | 0.33 | – | 0.99 | – | – | – | – |
| HMPMA, pbw | – | 0.316 | – | 0.948 | – | – | – |
| BHBM, pbw | 0.252 | 0.252 | 0.756 | 0.756 | – | – | – |
| Peroxide, pbw | 0.15 | 0.15 | 0.45 | 0.45 | – | 0.15 | 0.45 |

Notes: (1) ABS=30% butadiene rubber-modified styrene acrylonitrile resin; HBPMP, HBPMA, BHBM=stabilizers, see specification; Peroxide = 3,3,6,6,9,9-hexamethyl-1-1,2,4,5-tetraoxocyclononan, obtained as Interox HMCN-30-AL from Peroxid Chemie GMBH 50% solution by weight in aliphatic hydrocarbon.

The conversion of the stabilizer compounds/resin mixtures to grafted resins was determined by extracting the 20 min. samples with methanol and measuring the weight fraction extracted. The yield in % of theoretical for each component is summarized in Table II.

## TABLE II

Grafting Yield of Stabilizer Components
After 20 Min. Processing

| Example No. | Component | Yield % |
|---|---|---|
| 1 | HBPMP | 83 |
|   | BHBM | 93 |
| 2 | HMPMA | 97 |
|   | BHBM | 87 |
| 3 | HBPMP | 80 |
|   | BHBM | 92 |
| 4 | BMPMA | 87 |
|   | BHBM | 85 |

It will be apparent from these data that the stabilizer grating efficiency is quite good. The thermal oxidative stability of the extracted samples was determined by differential scanning calorimetry (DSC) in air, first by a dynamic scanning at 20°C/min. to establishing the exotherm onset and peak temperatures for each sample, and second by isothermal scan at 190°C to determine the time to onset of degradation. The values are summarized in Table III.

## TABLE III

### Thermal Oxidative Stability of Extracted Resins[1]

| Example No. | Exotherm Temp. (°C) onset | peak | Isothermal (190°C) onset (min.) |
|---|---|---|---|
| 1 | 196 | 210 | 1.4 |
| 2 | 198 | 210 | 1.3 |
| 3 | 219 | 229 | 10.1 |
| 4 | 226 | 236 | 17 |
| A | 170 | 193 | (2) |
| B | 184 | 201 | (2) |
| C | 181 | 200 | (2) |

Notes: (1) Resin formulations of indicated examples, see Table I. Melt processed at 180°C, 20 min.

(2) Not determined.

The thermal oxidative stability of the resins having grafted stabilizers is clearly better than the unstabilized base resins. The onset of the exothermic degradation occurs at a higher temperature for the grafted resins of Examples 1-4 than for unstabilized resins (Examples A-C) and peaks at a higher temperature as well. The isothermal scans at 190°C reflect the expected improvement in stability of the resins having a higher stabilizer level, Examples 3 and 4 compared with those having less bound stabilizers, Examples 1 and 2, and further establish the presence of grafted stabilizers. No isothermal scan of the control resins was made, since the exotherm onset occurs below the 190°C isothermal scan temperature.

The UV stability of the resins was evaluated by exposing solvent-cast films of extracted and unextracted resins to the radiation of a Xenon 6,000 w. lamp at 60% relative humidity. The films were inspected and analyzed by IR spectroscopy to determine the rate measured by the development of carbonyl and hydroxyl groups and deterioration in ethylenic unsaturation. The analyses, summarized on Table IV, were plotted and the length of induction time for onset of photo-oxidation was determined as the basis for the comparison.

## TABLE IV

### Induction Time for Photo Oxidation of Resin Samples [1]

| Example No. | Induction Time hrs. [2] | | $C=C$ [3] |
|---|---|---|---|
| | OH | CO | |
| 3 (unextr) | 98 | 87.5 | 90 |
| 3 (extracted) | 78 | 72.5 | 75 |
| 4 (unextr) | 95 | 95 | 110 |
| A | 0 | 33 | 0 |

Notes: (1) Thermally processed formulations of indicated examples, 180°/20 min.

(2) Time of exposure to Xenon 6000 w. lamp, 60% rel. hum., hrs. to onset of rapid degradation, measured by IR.

(3) Hrs. to rapid loss in -C=C- level, measured by IR.

0084882

The IR measurement of carbonyl (CO) and hydroxyl (OH) development over the period of UV exposure serves for comparing the relative stabilities of the samples. The unstabilized sample, Control A, exhibits immediate development of OH groupings and early (33 hr.) development of carbonyl radicals. The stabilized samples, both extracted and unextracted, exhibit a substantial induction period before onset of rapid photo oxidation which is characteristic of UV stabilized resins. Similarly, the loss in ethylenic unsaturation (C=c) occurs rapidly for unstabilized resins, but is delayed for a substantial time period by the presence of bound stabilizers. It is apparent from these data that rubber-modified resin compositions are effectively stabilized by the process of this invention.

In the following examples, rigid styrene-acrylonitrile copolymers containing no impact modifier were stabilized according to the processes of this invention. The formulations are summarized in Table V. The resin mixtures were prepared and melt processed and molded substantially as in Examples 1-4.

TABLE V

| Example No. | 5 | 6 | 7 |
|---|---|---|---|
| Components: (1) | | | |
| SAN (2.02/1), pbw | 100 | – | – |
| SAN (1.93/1), pbw | – | 100 | – |
| SAN (3.02/1), pbw | – | – | 100 |
| HMPMA, pbw | 0.8 | 0.8 | 0.8 |
| BHBM, pbw | 0.8 | 0.8 | 0.8 |
| Peroxide, pbw | 0.4 | 0.4 | 0.4 |

Notes: (1) SAN = styrene-aerylonitrile copolymer with (S/AN) ratio. HMPMA, BHBM, peroxide, see note (1) Table I. All formulations contain 0.2 pbw lubricant.

The resin samples taken after 20 min. melt processing were extracted for 21 hours with hot methanol, then
analyzed for bound stabilizers by UV absorbtion spectroscopy.  A comparison with reference samples of SAN
containing no stabilizers demonstrated that the SAN
resins processed according to the method of the invention contained bound, unextractable stabilizers.

The process of this invention may thus be employed
to incorporate bound or grafted stabilizers into thermoplastics containing no impact modifier.  The stabilized
rigid resins of the invention will be usefully stabilized toward thermal
oxidation and UV radiation, and may be further compounded with unstabilized resins and particularly with
rubbery impact modifiers to provide impact modified
thermoplastics having bound stabilizers in the rigid
phase.

The process of this invention will thus be seen to
be a method for incorporating stabilizers into a thermoplastic resin comprising the steps of combining the
unstabilized thermoplastic, the stabilizer and as a
reaction promoter a free radical initiator, and melt
processing the mixture, thereby grafting the stabilizer
to the thermoplastic resin, and a method for stabilizing
thermoplastic resins.

## CLAIMS

1.      Stabilized thermoplastics obtainable by mixing a thermoplastic resin, a stabilizing amount of at least one mercaptan group-containing stabilizer having the structure R-SH, and a reaction promoter, and melt processing said mixture.

2.    A method for stabilizing thermoplastics as set forth in Claim 1 comprising the steps of:

providing a mixture of a thermoplastic resin, a stabilizing amount of at least one mercaptan group-containing stabilizer having the structure R-SH, and a reaction promoter; and

melt processing said mixture.

3.    A method for stabilizing thermoplastics comprising the steps of:

providing a mixture of a thermoplastic resin, at least one mercaptan group-containing stabilizer having the structure R-SH wherein R is an aralkylene radical selected from the group consisting of hydroxyphenylalkylene radicals, benzoylphenylalkylene radicals and hydroxy-(benzoylphenyl) alkylene radicals, and a reaction promoter selected from the group consisting of peroxides and hydroperoxides; and

melt processing said mixture.

4.   The method of Claim 3 wherein said thermoplastic resin is a styrenic resin.

5.   The method of Claim 3 wherein said thermoplastic resin is a rubber-modified styrenic resin.

6. The method of Claim 3 wherein said stabilizer is a compound selected from the group consisting of hydroxyphenylalkylene mercaptans and mercaptoalkyl esters of hydroxyalkylated hydroxybenzophenones.

7. A method for stabilizing thermoplastics comprising the steps of:

providing a mixture of a rubber modified styrenic resin selected from the group consisting of high impact polystyrene, graft acrylonitrile-butadiene-styrene resins and graft methyl methacrylate-butadiene-styrene resins; a stabilizing amount of at least one stabilizer selected from the group consisting of a 4-hydroxy-2,6-di-t-butylphenylmethyl mercaptan, 2-(3-hydroxy-4-(benzoyl)-phenoxy)ethyl-3 mercapto propionate and 2-(3-hydroxy-4-(benzoyl) phenoxy)ethyl-2-mercapto acetate; and a reaction promoter selected fom the group consisting of dicumyl peroxide, cumene hydroperoxide and 3,3,6,6,9,9-hexamethyl-1,2,4,5-tetraoxocyclononan; and

melt processing said mixture.

8. The method of Claim 7 wherein said mixture comprises from 0.1 to about 2 wt.% of said stabilizer and from about 0.01 to about 1.0 wt.% of said reaction promoter.

9. The method of Claim 7 wherein said melt processing is carried out at a temperature in the range of from about 140 to 250°C and for a period of from about 1 to about 30 min.

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | DE-A-2 509 654  (G.SCOTT) <br> *Claims 1,16; example 29* <br><br> --- | 1-8 | C 08 K   5/37 <br> C 08 F   8/34 |
| X | EP-A-0 035 472  (CIBA-GEIGY AG.) <br> *Claims; page 17, lines 12-16* <br><br> ----- | 1-9 | |

TECHNICAL FIELDS
SEARCHED (Int. Cl. 3)

C 08 F
C 08 J
C 08 K
C 08 L

The present search report has been drawn up for all claims

| Place of search | Date of completion of the search | Examiner |
|---|---|---|
| THE HAGUE | 11-04-1983 | HOFFMANN K.W. |